# FASCICULE DE BREVET EUROPEEN

(11) **EP 4 127 405 B1**
(45) Date de publication et mention de la délivrance du brevet: **22.10.2025**
(21) Numéro de dépôt: 21716802.0
(22) Date de dépôt: 15.03.2021
(51) Int. Cl.: F01D 5/08, F01D 17/14, F01D 25/12, F02C 7/12

(54) **TURBOMACHINE AVEC DISPOSITIF DE REFROIDISSEMENT ET DE PRESSURISATION D'UNE TURBINE**
TURBOMASCHINE UND VORRICHTUNG ZUR KÜHLUNG UND ZUR DRUCKBEAUFSCHLAGUNG EINER TURBINE
TURBOMACHINE WITH DEVICE FOR COOLING AND PRESSURIZING A TURBINE

(30) Priorité: 24.03.2020 FR 2002885
(43) Date de publication de la demande: 08.02.2023
(73) Titulaire: SAFRAN AIRCRAFT ENGINES, 75015 Paris (FR)
(72) Inventeur: MAURER, Paco, 77550 MOISSY-CRAMAYEL (FR); CATY, Fabien Roger Gaston, 77550 MOISSY-CRAMAYEL (FR)
(74) Mandataire: Gevers & Orès
(86) Numéro de dépôt international: PCT/FR2021/050424
(87) Numéro de publication internationale: WO 2021/191523

(56) Documents cités:
- EP-A2- 1 632 649
- WO-A1-2015/026597
- FR-A1- 3 061 739
- FR-A1- 3 072 414
- GB-A- 2 246 836
- US-A- 3 972 181

## Description

### Domaine technique de l'invention

La présente invention concerne une turbomachine d'aéronef comportant un dispositif de ventilation et de pressurisation d'un rotor de turbine.

### Arrière-plan technique

Une turbomachine comporte généralement une turbine haute pression et une turbine basse pression situées d'amont en aval dans une veine interne annulaire d'écoulement d'un flux de gaz de la turbomachine, dont chacune comporte un rotor porteur d'aubes mobiles.

Chaque turbine comporte un ou plusieurs étages annulaires porteurs d'aubes. Des moyens de distribution comportant des aubes fixes ou distributeurs destinées à mettre en rotation le flux de gaz dans la veine sont agencés entre les turbines haute et basse pression et, lorsqu'une turbine comporte plus d'un étage, entre ses étages.

Entre les turbines haute et basse pression, ces moyens de distribution sont portés par un stator, qui est généralement un distributeur basse pression constitué de secteurs angulaires porteurs d'aubes fixes agencés circonférentiellement de façon adjacente de manière à former un anneau de distribution au sein de la veine, ou qui est un carter structural inter-turbines qui comporte une virole intérieure et une virole extérieure entre lesquelles sont agencées des aubes fixes permettant de distribuer le flux de gaz au sein de la veine.

Dans le cas d'une turbine à plusieurs étages, chaque rotor de turbine est généralement constitué d'un assemblage de disques et viroles annulaires boulonnés les uns aux autres, les viroles étant montées par des paliers sur un carter interne structural de la turbomachine, ou les unes par rapport aux autres lorsqu'il s'agit de cas de viroles n'appartenant pas à la même turbine.

Le carter interne structural, les viroles de turbine, les secteurs angulaires de redresseur, ou le carter inter-turbines structural, sont des éléments qui, du fait de leur proximité avec les gaz chauds issus de la chambre de combustion de la turbomachine, peuvent, s'ils ne sont pas correctement refroidis, être soumis à d'importants phénomènes de dilatation risquant de remettre en question l'intégrité de la turbomachine.

Pour assurer un refroidissement correct de chaque turbine, la turbomachine est équipée d'un dispositif de pressurisation et de refroidissement de la turbine. Ce dispositif permet d'assurer un contrôle des jeux internes de ces éléments et d'éviter un reflux des gaz chauds de la veine à l'intérieur de ceux-ci.

Dans un tel dispositif, de l'air est prélevé sur le compresseur haute pression puis acheminé à l'intérieur du stator, via des aubes du distributeur basse pression ou via des bras du carter inter-turbines vers une première enceinte interne qui est délimitée intérieurement au stator, axialement entre une turbine haute pression et une turbine basse pression de la turbomachine et qui communique avec une seconde enceinte interne. La première enceinte interne peut être formée dans un carter structural inter-turbines ou être délimitée par les viroles et les disques d'une des turbines. L'air qui a traversé le distributeur basse pression ou le carter inter-turbines est par exemple introduit dans la première enceinte délimitée par le carter inter-turbines ou le distributeur basse pression entre les turbines haute et basse pression, et à partir de celle-ci, il permet de ventiler différents carters de la turbomachine et le carter interne structural et, en communiquant avec au moins une seconde enceinte interne agencée à l'intérieur du rotor d'une des turbines, par exemple la turbine basse pression de remonter vers le ou les disques de ce rotor afin alimenter des fuites ou purges agencées à la jonction du rotor et pour interdire la réintroduction des gaz chauds qui circulent dans la veine primaire vers l'intérieur de la turbine. La réintroduction des gaz chauds nuirait à l'intégrité des disques de turbine. L'air pressurisé permet aussi d'assurer le refroidissement des aubes de turbine qui sont soumises à des températures très élevées.

Conventionnellement, des passages ayant des sections fixes sont agencés entre la première enceinte et la seconde enceinte. Ces passages sont constitués de diaphragmes ou d'injecteurs. Ces passages permettent de contrôler la surpression dans le carter interne, les purges entre le rotor et le diffuseur, et le refroidissement des différents éléments de la turbine, ce qui permet d'assurer l'intégrité physique du moteur. De tels passages sont décrits dans le document FR-3.072.414-A1.

Lorsqu'il s'agit de refroidir la turbine basse pression, les injecteurs sont généralement réalisés sous la forme de trous qui sont pratiqués dans une virole fixe de la turbine basse pression et qui permettent le passage de l'air depuis la première enceinte, alimentée en air sous pression par le compresseur haute pression, vers la seconde enceinte, et en particulier vers les disques de turbine. L'axe de ces trous est généralement parallèle à l'axe de la turbomachine.

Une partie de l'air pressurisé à basse température issu du compresseur haute pression est ainsi prélevée par l'intermédiaire d'un conduit de prélèvement et acheminée vers la première enceinte. A cet effet, une partie du conduit de prélèvement traverse par exemple une aube du distributeur de la turbine basse pression ou un bras du carter inter-turbines. De la première enceinte, il est ensuite injecté par l'intermédiaire des injecteurs dans la seconde enceinte pour remonter vers les disques, les refroidir, et repousser les gaz chauds issus de la veine primaire.

Le dimensionnement des injecteurs est d'une importance capitale. En effet, le prélèvement d'air sur le compresseur haute pression réduit la performance du moteur et nécessite un surdimensionnement du compresseur pour assurer néanmoins un débit d'air suffisant à l'alimentation de la combustion.

Avec un injecteur à section fixe, le prélèvement d'air est calibré sur le point de vol le plus pénalisant de la turbomachine, qui correspond au cas où le rapport de la pression entre l'amont et l'aval de l'injecteur est le plus faible, y compris en cas de panne de la turbomachine. Pour les autres points de vol, les débits de refroidissement des disques ou les débits de purge sont donc supérieurs aux valeurs minimales demandées, de sorte que le prélèvement effectué sur le compresseur haute pression est plus élevé qu'il n'est nécessaire. L'air ainsi détourné de manière superfétatoire à destination de la deuxième enceinte est de l'air qui ne circule donc pas dans la veine primaire et dont la production a consommé une partie de la puissance de la turbomachine en pure perte.

Pour remédier à ces inconvénients, on a proposé des injecteurs à section variable dans les documents WO-2015/026597-A1, FR-3.061.739-A1, US-3.972.181-A, GB-2.246.836-A et EP-1.632.649-A2. Néanmoins tous ces injecteurs nécessitent soit une commande active, soit n'offrent aucune progressivité.

### Résumé de l'invention

L'invention remédie à cet inconvénient en proposant un dispositif de ventilation et de pressurisation d'un rotor de turbine de turbomachine comportant des injecteurs de section variable permettant de réguler le débit d'air prélevé.

La solution proposée permet de limiter les inconvénients susmentionnés en modulant la section des injecteurs en fonction du point de fonctionnement du moteur.

Dans ce but, l'invention concerne une turbomachine d'aéronef comportant au moins un compresseur haute pression, une turbine haute pression, une turbine basse pression, un stator agencé axialement entre la turbine haute pression et la turbine basse pression, un rotor de ladite turbine basse pression d'axe porteur d'aubes, et un dispositif de ventilation et de pressurisation de ce rotor comportant au moins un conduit de prélèvement apte à prélever une fraction d'air circulant dans le compresseur haute pression et à l'acheminer vers une première enceinte interne qui est délimitée intérieurement au stator, la première enceinte communiquant avec au moins une seconde enceinte interne délimitée par ledit rotor de turbine basse pression, lesdites première et secondes enceintes étant séparées au moins en partie par une virole fixe d'axe A, ledit dispositif comportant au moins un injecteur traversant ladite virole fixe parallèlement audit axe A et établissant une communication entre les première et seconde enceintes, caractérisé en ce que l'injecteur est de section variable, ledit injecteur comportant au moins un orifice d'injection traversant ladite virole et un obturateur configuré pour obturer progressivement ledit orifice d'injection en réponse à une différence de pression entre lesdites première et deuxième enceintes.

Selon d'autres caractéristiques de la turbomachine :
- la section varie entre une section maximale de pleine ouverture de l'injecteur et une section minimale non nulle,
- l'obturateur comporte un tiroir coulissant dans un plan perpendiculaire à un axe de l'orifice d'injection, qui est apte à obturer progressivement ledit orifice d'injection, et un moyen d'actionnement dudit tiroir,
- le moyen d'actionnement du tiroir comporte un premier et un second pistons de commande, solidaires de chacune des extrémités du tiroir, le premier piston étant monté mobile dans une première chambre communiquant avec la première enceinte et le second piston étant monté mobile dans une seconde chambre communiquant avec la seconde enceinte, et l'ensemble formé des pistons et du tiroir est rappelé élastiquement vers une position de pleine ouverture de l'obturateur,
- le moyen d'actionnement du tiroir comporte un boitier tubulaire qui est accolé à la virole fixe, qui comporte sur sa périphérie l'orifice d'injection et un orifice d'entrée diamétralement opposé, les extrémités dudit boîtier délimitant les première et seconde chambres qui communiquent respectivement par des lumières respectives avec les première et secondes enceintes et qui reçoivent les premier et second pistons solidaires du tiroir (64), le tiroir comportant une paroi d'obturation solidaire d'un des premier et second pistons et agencée de de manière à pouvoir masquer l'orifice d'entrée pour obturer l'orifice d'injection, le second piston étant en outre rappelé vers la position de pleine ouverture de l'obturateur par un ressort logé dans la seconde chambre,
- l'obturateur comporte un élément réalisé en un matériau possédant un coefficient de dilatation thermique élevé, qui est apte à obturer progressivement ledit orifice d'injection, ladite dilatation accompagnant une augmentation de différence de pression entre lesdites première et deuxième enceintes,
- la virole fixe comporte une pluralité d'injecteurs répartis angulairement de manière uniforme sur un même diamètre de ladite virole fixe,
- le stator comporte des bras reliant une virole interne dudit stator à une virole externe dudit stator et au moins une partie du conduit de prélèvement est formée à l'intérieur de l'un desdits bras.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue schématique en coupe d'une turbomachine comportant un dispositif de ventilation et de pressurisation d'un rotor de turbine ;
[Fig. 2] La figure 2 est une vue schématique de détail d'un dispositif de ventilation et de pressurisation d'un rotor de turbine conventionnel ;
[Fig. 3] La figure 3 est une vue schématique en coupe de détail d'une virole fixe de turbine équipée d'un injecteur pour un dispositif de ventilation et de pressurisation d'un rotor de turbine selon l'invention, représenté dans une première position ;
[Fig. 4] La figure 4 est une vue schématique de la virole et de l'injecteur précédemment représenté à la figure 3, vu dans une seconde position ;
[Fig. 5] La figure 5 est une vue schématique d'une virole fixe de turbine équipée d'une pluralité d'injecteurs ;
[Fig. 6] La figure 6 est une vue schématique en coupe de la virole fixe de turbine de la figure 5.

### Description détaillée de l'invention

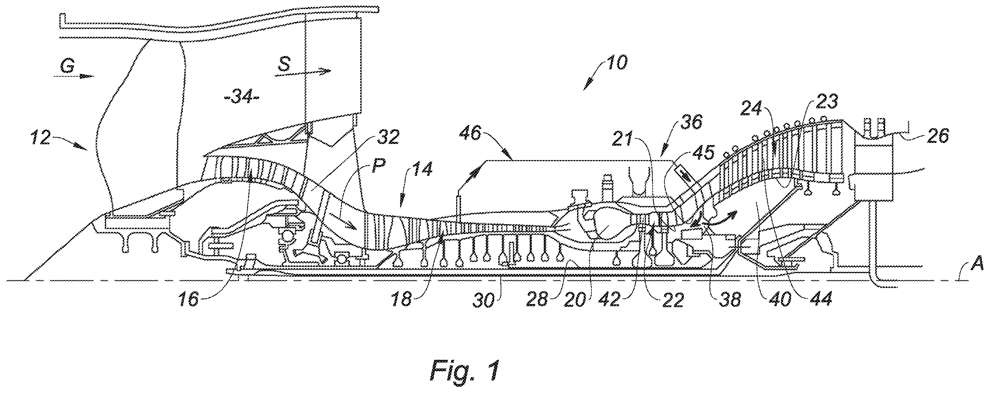

On a représenté à la figure 1 une turbomachine 10 à double flux pour un aéronef d'axe A. De manière connue, la turbomachine 10 comporte une soufflante 12 et un moteur à turbine à gaz 14. Le moteur à turbine à gaz 14 comporte un compresseur basse pression 16, un compresseur haute pression 18, une chambre de combustion 20, une turbine haute pression 22, une turbine basse pression 24, et une tuyère d'échappement 26. Le rotor du compresseur haute pression 18 et le rotor 21 de la turbine haute pression 22 sont reliés par un arbre haute pression 28 et forment avec lui un corps haute pression (HP). Le rotor du compresseur basse pression 16 et le rotor 23 de la turbine basse pression 24 sont reliés par un arbre basse pression 30 et forment avec lui un corps basse pression (BP).

La soufflante 12 aspire un flux d'air G en amont de la turbomachine.

Le moteur à turbine à gaz 14 est traversé par un flux de gaz primaire P issu du flux de gaz G. Comme l'illustrent les flèches de la figure 1, une veine d'écoulement 32 du flux de gaz primaire P traverse ainsi successivement le compresseur basse pression 16, le compresseur haute pression 18, la chambre de combustion 20, la turbine haute pression 22, la turbine basse pression 24, et la tuyère d'échappement 26.

En aval de la soufflante 12, un flux de gaz secondaire S circule dans une veine d'écoulement 34 du flux de gaz secondaire S et rejoint le flux de gaz primaire P en sortie de la tuyère 26 pour fournir une poussée à la turbomachine 10.

La turbomachine 10 comporte de manière connue un dispositif 36 de ventilation et de pressurisation d'un rotor 23 de turbine 24. Tel qu'il a été représenté à la figure 1, le dispositif 36 assure la ventilation et la pressurisation des rotors 21, 23 de turbine haute pression 22 et basse pression 24, mais cette configuration n'est pas limitative d'un tel dispositif, qui pourrait n'être dédié qu'au refroidissement d'un seul rotor 23. Le dispositif 36 de ventilation et de pressurisation est destiné à assurer le refroidissement des pieds (non représenté) d'aubes 42, 44, et ce faisant des aubes 42,44, des rotors 21, 23 des turbines 22, 24 et à éviter l'intrusion des gaz chauds issus de la veine de gaz primaire 32 à l'intérieur d'une enceinte interne amont 38, délimitée par le rotor de la turbine haute pression 22 et d'une enceinte aval 40, délimitée par le rotor 23 de la turbine basse pression 24.

Les rotors 21, 23 des turbines 22, 24 étant constitués d'un assemblage de disques et de viroles, l'air pressurisé remonte vers les disques pour refroidir les aubes 42, 44 et leurs pieds (non représentés).

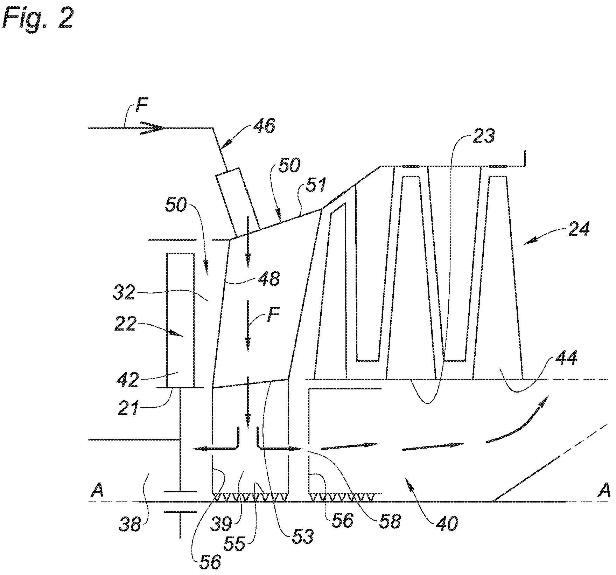

De manière connue et en référence à la figure 2, ce dispositif 36 comporte au moins un conduit de prélèvement 46 apte à prélever une fraction F d'air circulant dans le compresseur haute pression 18 de la turbomachine. Par exemple, de manière non limitative, le conduit de prélèvement 46 traverse un bras 48 d'un stator 50 qui comporte d'une manière générale une pluralité de bras 48 reliant une virole interne 53 dudit stator 50 à une virole externe 51 dudit stator 50. Le stator 50 peut avoir une fonction de carter inter-turbines soutenant des paliers guidant au moins un arbre de turbine en rotation et/ou une fonction aérodynamique de distributeur pour l'étage suivant d'aubes mobiles de la turbine. En ce cas, les bras 48 peuvent être les aubes de ce distributeur.

On s'intéresse plus particulièrement dans le cas présent au refroidissement du rotor 23 de la turbine basse pression 24**.**

Dans la suite de la présente description, on décrit un stator 50 qui est un carter inter-turbines, mais cette configuration n'est pas limitative de l'invention.

Le dispositif 36 achemine la fraction F d'air prélevée dans le compresseur haute pression 18 vers une première enceinte interne 39 qui est formée dans un carter interne 55 du stator 50 formant carter inter-turbines de la turbomachine et qui communique avec des disques (non représentés) et des aubes 44 du rotor 23 de la turbine basse pression 24.

Dans ce dernier cas notamment, le rotor 23 de la turbine basse pression 24 comporte des fuites qui permettent le passage de la fraction d'air F pressurisée d'une seconde enceinte interne 40 de la turbomachine, qui est ici l'enceinte aval 40 délimitée par le rotor de la turbine basse pression 24, vers la veine 32, ceci afin de refroidir les aubes 44 et d'éviter que les gaz chauds reculant dans la veine 32 ne pénètrent à l'intérieur des carters de la turbomachine.

Les premières et secondes enceintes 39, 40 sont séparées, au moins en partie, par une virole fixe 56 d'axe A. Sur la figure 2, la virole fixe 56 est une virole d'un stator de la turbine basse pression 24. Toutefois, cette configuration n'est pas limitative de l'invention et elle pourrait faire partie du stator ou carter inter-turbines 50.

Conventionnellement, la communication entre les premières et secondes enceintes 39, 40 est assurée par au moins un injecteur 58 constitué d'un perçage de section fixe réalisé dans la virole 56.

Cette configuration présente de nombreux inconvénients.

En effet elle ne permet pas de moduler le débit de la fraction F d'air prélevé circulant dans le circuit du dispositif de refroidissement.

Le dimensionnement des injecteurs 58 est d'une importance capitale. En effet, celui-ci doit être réalisé de manière à garantir un approvisionnement en air suffisant de la seconde enceinte 44 alors même que le rapport de pression entre l'amont et l'aval de l'injecteur 58 est le plus faible, ce qui correspond à un point de vol de la turbomachine 10 associé à des régimes élevés de rotation du compresseur haute pression, par exemple pour des régimes de croisière ou de décollage.

En dehors de ce point de vol, le rapport de pression entre l'amont et l'aval de l'injecteur 58 est plus élevé, et de ce fait le prélèvement d'air sur le compresseur haute pression 18 est en partie superfétatoire. En effet, pour les autres points de vol, les débits de refroidissement des disques ou les débits de purge sont supérieurs aux valeurs minimales demandées, de sorte que le prélèvement effectué sur le compresseur haute pression est plus élevé qu'il n'est nécessaire. L'air ainsi détourné de manière superfétatoire à destination de la première enceinte est de l'air qui ne circule donc pas dans la veine primaire et dont la production a consommé une partie de la puissance de la turbomachine en pure perte. Ce prélèvement réduit par conséquent les performances de la turbomachine 10.

Toutefois, ce prélèvement superfétatoire nécessite un surdimensionnement du compresseur haute pression 18 pour assurer néanmoins un débit d'air suffisant à l'alimentation de la combustion. De ce fait, ce prélèvement présente aussi l'inconvénient d'accroître inutilement la masse totale de la turbomachine.

L'invention remédie à cet inconvénient en proposant un injecteur 58 de section variable permettant de moduler le débit du prélèvement de la fraction de gaz F.

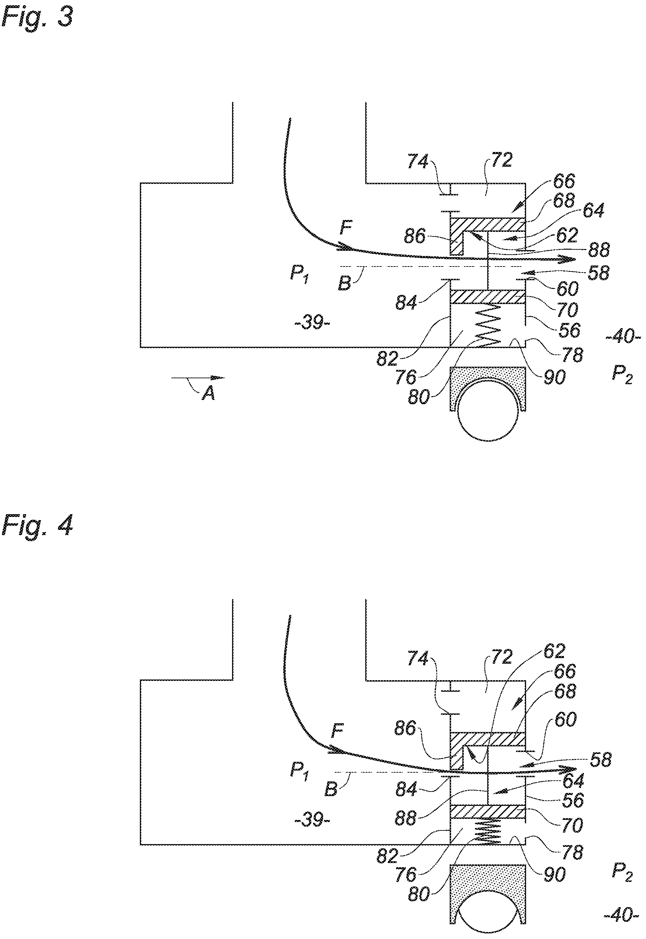

On a représenté aux figures 3 et 4 de manière schématique un injecteur 58 réalisé conformément à l'invention. La représentation schématique ne préjuge pas du positionnement de l'injecteur 58 sur la virole 56 de la turbine basse pression ou sur le carter inter-turbines précédemment décrit.

Conformément à l'invention, comme l'illustrent les figures 3 et 4, le dispositif 36 comporte comme précédemment au moins un injecteur 58 traversant la virole fixe 56 selon un axe B parallèle à la direction de l'axe A et établissant une communication entre les première et seconde enceintes 39, 40 à cette différence que cet injecteur 58 est de section variable configurée pour varier progressivement en réponse à une différence de pression entre les première et deuxième enceintes 39, 40.

La section de l'injecteur 58 est susceptible de varier en fonction de la différence de pression entre la pression P₁ régnant en amont dans l'enceinte 39 et la pression P₂ régnant en aval dans l'enceinte 40. Cette section varie entre une section maximale de pleine ouverture, représentée à la figure 3, et une section d'ouverture réduite représentée à la figure 4. De préférence, la section d'ouverture réduite correspond à une section minimale non nulle et de ce fait l'injecteur 58 n'est pas entièrement obstrué dans cette position.

Plus particulièrement, comme l'illustrent les figures 3 et 4, conformément à l'invention, l'injecteur 58 comporte au moins un orifice d'injection 60 traversant la virole 56 et un obturateur 62 qui est configuré pour obturer progressivement cet orifice d'injection 60 en réponse à ladite différence de pression entre la pression P₁ dans la première enceinte 39 en amont de l'injecteur 58 et la pression P₂ dans la seconde enceinte 40 en aval de l'injecteur 58.

Plus particulièrement, l'obturateur 62 comporte un tiroir 64 qui est monté coulissant dans un plan perpendiculaire à un axe B de l'orifice d'injection 60, et qui est apte à obturer progressivement l'orifice d'injection 60. Le tiroir 64 est mû par un moyen d'actionnement 66 de ce tiroir 64.

Le moyen d'actionnement 66 du tiroir 64 est destiné à assurer le coulissement du tiroir 64 en fonction de la différence de pression entre les premières et secondes enceintes 39 et 40. Pour cela, il doit nécessairement être soumis aux pressions P₁ et P₂ régnant dans ces deux enceintes 39, 40.

À cet effet, le moyen d'actionnement 66 du tiroir comporte un premier et un second pistons de commande 68, 70, solidaires du tiroir 64, qui sont montés tous les deux coulissants de manière simultanée perpendiculairement à l'axe B de l'orifice d'injection 60. Chaque piston de commande 68, 70 est solidaire d'une extrémité du tiroir 64. Le premier piston 68 est monté mobile dans une première chambre 72 communiquant avec la première enceinte 39 par l'intermédiaire d'une lumière 74 et le second piston 70 est monté mobile dans une seconde chambre 76 communiquant avec la seconde enceinte 40 par l'intermédiaire d'une lumière 78.

L'ensemble formé des pistons 68, 70 et du tiroir 64 est rappelé élastiquement vers une position de pleine ouverture de l'obturateur 62 par un moyen de rappel élastique 80.

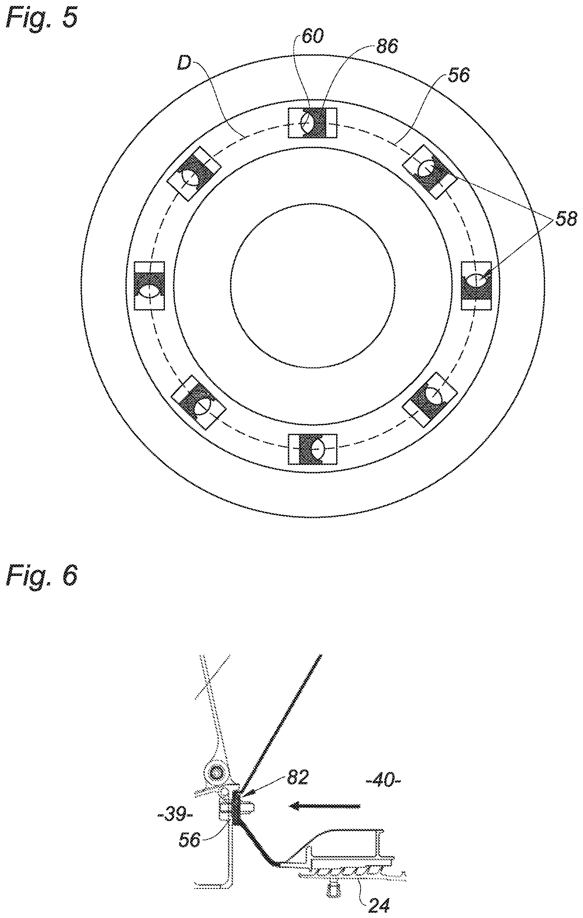

Plus particulièrement, le moyen d'actionnement 66 du tiroir 64 comporte un boitier tubulaire 82 qui est accolé à la virole fixe 56, et qui comporte sur sa périphérie l'orifice d'injection 60 et un orifice d'entrée 84 diamétralement opposé. Les extrémités du boîtier tubulaire 82 délimitent les première et seconde chambres 72, 76 qui communiquent respectivement par leurs lumières respectives 74, 78 avec les première et seconde enceintes 39, 40 et qui reçoivent les premier et second pistons 68,70 solidaires du tiroir 64. Le boîtier tubulaire 82 n'est pas nécessairement de section cylindrique, mais peut présenter une section rectangulaire aplatie de faible encombrement axial, comme représenté à la figure 6.

Le tiroir 64 comporte une paroi d'obturation 86 solidaire du premier piston 68 qui épouse une partie de la paroi interne du boîtier tubulaire 82, cette partie de la paroi interne du boîtier tubulaire 82 comportant l'orifice d'entrée 84.

De la sorte la paroi d'obturation 86 est susceptible de masquer l'orifice d'entrée 84 pour obturer par voie de conséquence l'orifice 60 de l'injecteur 58.

Le tiroir 64 comporte en outre une bielle 88 de liaison des deux pistons 68, 70. Enfin, le moyen de rappel 80 est constitué d'un ressort 80 formant le moyen de rappel qui est logé dans la seconde chambre 76 entre un fond 90 de cette chambre 76 et le second piston 70.

De la sorte, le tiroir 64 est soumis à la différence de pression s'exerçant entre le premier piston 68 et le deuxième piston 70. C'est donc la différence entre la pression P₁ régnant dans la première enceinte 39 et la pression P₂ régnant dans la seconde enceinte 40 qui assure la mobilité du tiroir 64.

Selon un mode de réalisation (non représenté) en variante de l'invention, l'obturateur pourrait comporter un élément réalisé en un matériau possédant un coefficient de dilatation thermique élevé, qui est apte à obturer progressivement ledit orifice d'injection, ladite dilatation accompagnant de manière connue une augmentation de différence de pression entre lesdites première et deuxième enceintes 39, 40.

Cette solution technique n'est toutefois pas privilégiée par l'invention.

Comme l'illustre la figure 5, la virole fixe 56 comporte une pluralité d'injecteurs 58, dont on a représenté les parois d'obturation 86, répartis angulairement de manière uniforme sur un même diamètre D de virole fixe 56. Cette configuration garantit un bon équilibrage des masses de la virole 56 lors de la réalisation des orifices d'injection 60, et en outre cette conception comportant une pluralité d'injecteurs 58 permet, de préférence un nombre limité d'injecteurs 58, d'assurer le fonctionnement du dispositif en cas de défaillance d'un ou plusieurs des injecteurs 58. En ce cas, tout défaut d'ajustement du débit par un injecteur défaillant 58 sera spontanément compensé par les autres injecteurs 58.

L'invention trouve donc à s'appliquer à une turbomachine d'aéronef comportant au moins une turbine, qu'il s'agisse d'une turbine haute ou basse pression.

Une turbomachine équipée d'un tel dispositif de ventilation et de pressurisation 36 permet notamment de limiter les variations de débit de ventilation au cours des différentes phases de fonctionnement de la turbomachine. Elle permet notamment d'ajuster les débits de ventilation alors même que l'évolution de la température des turbines de la turbomachine ne suit pas les phases de fonctionnement de celle-ci. Par exemple, lors des phases d'arrêt ou de ralenti de la turbomachine suite à un fonctionnement en régime normal, la température des turbines continue à augmenter alors même que le compresseur haute pression ne fournit plus assez d'air pour en assurer le refroidissement. La calibration des injecteurs 48 selon un diamètre plus élevé, pouvant être ajusté en fonctionnement par l'intermédiaire du dispositif de ventilation 36, permet d'assurer une ventilation adéquate de l'enceinte 40 sans que celle-ci n'entraîne, en fonctionnement normal, un débit superfétatoire de prélèvement sur le compresseur haute pression qui nuirait au rendement de la turbomachine, puisque celui-ci peut être réduit par les injecteurs à section variable. Cette solution permet donc d'optimiser la durée de vie des turbines sans pénaliser le fonctionnement de la turbomachine en régime établi.

## Revendications

1. Turbomachine (10) d'aéronef comportant au moins un compresseur haute pression (18), une turbine haute pression (22), une turbine basse pression (24), un stator (50) agencé axialement entre la turbine haute pression (22) et la turbine basse pression (24), un rotor (23) de ladite turbine (24) basse pression d'axe (A) porteur d'aubes, et un dispositif (36) de ventilation et de pressurisation de ce rotor (23) comportant au moins un conduit de prélèvement (46) apte à prélever une fraction d'air (F) circulant dans le compresseur haute pression (18) et à l'acheminer vers une première enceinte (39) interne qui est délimitée intérieurement au stator (50), la première enceinte communiquant avec au moins une seconde enceinte (40) interne délimitée par ledit rotor (23) de turbine (24) basse pression, lesdites première et secondes enceintes (39, 40) étant séparées au moins en partie par une virole (56) fixe d'axe (A), ledit dispositif comportant au moins un injecteur (58) traversant ladite virole fixe (56) parallèlement audit axe (A) et établissant une communication entre les première et seconde enceintes (39, 40), **caractérisé en ce que** l'injecteur (58) est de section variable, ledit injecteur (58) comportant au moins :
- un orifice d'injection (60) traversant ladite virole (56) ; et
- un obturateur (62) configuré pour obturer progressivement ledit orifice d'injection (60) en réponse à une différence de pression entre lesdites première et deuxième enceintes (39, 40).

2. Turbomachine (10) selon la revendication précédente, **caractérisé en ce que** la section varie entre une section maximale de pleine ouverture de l'injecteur (58) et une section minimale non nulle.

3. Turbomachine (10) selon la revendication 1, **caractérisé en ce que** l'obturateur (62) comporte un tiroir (64) coulissant dans un plan perpendiculaire à un axe (B) de l'orifice d'injection (60), qui est apte à obturer progressivement ledit orifice d'injection (60), et un moyen d'actionnement (66) dudit tiroir (64).

4. Turbomachine (10) selon la revendication précédente, **caractérisé en ce que** le moyen d'actionnement (66) du tiroir (64) comporte un premier et un second pistons de commande (68, 70), solidaires de chacune des extrémités du tiroir (64), le premier piston (68) étant monté mobile dans une première chambre (72) communiquant avec la première enceinte (42) et le second piston (70) étant monté mobile dans une seconde chambre (76) communiquant avec la seconde enceinte (38), et **en ce que** l'ensemble formé des pistons (68, 70) et du tiroir (64) est rappelé élastiquement vers une position de pleine ouverture de l'obturateur (62).

5. Turbomachine (10) selon la revendication précédente, **caractérisé en ce que** le moyen d'actionnement (66) du tiroir (64) comporte un boitier tubulaire (82) qui est accolé à la virole fixe (56), qui comporte sur sa périphérie l'orifice d'injection (60) et un orifice d'entrée (84) diamétralement opposé, les extrémités dudit boîtier (82) délimitant les première et seconde chambres (72, 76) qui communiquent respectivement par des lumières respectives (74, 78) avec les première et secondes enceintes (42,38) et qui reçoivent les premier et second pistons (68, 70) solidaires du tiroir (64), le tiroir (64) comportant une paroi (86) d'obturation solidaire d'un des premier et second pistons (68, 70) et agencée de de manière à pouvoir masquer l'orifice d'entrée (84) pour obturer l'orifice d'injection, le second piston (70) étant en outre rappelé vers la position de pleine ouverture de l'obturateur (62) par un ressort (80) logé dans la seconde chambre (76).

6. Turbomachine (10) selon la revendication 1, **caractérisé en ce que** l'obturateur comporte un élément réalisé en un matériau possédant un coefficient de dilatation thermique élevé, qui est apte à obturer progressivement ledit orifice d'injection, ladite dilatation accompagnant une augmentation de différence de pression entre lesdites première et deuxième enceintes (39, 40).

7. Turbomachine (10) selon la revendication précédente, **caractérisé en ce que** la virole fixe (56) comporte une pluralité d'injecteurs (58) répartis angulairement de manière uniforme sur un même diamètre (D) de ladite virole fixe (56).

8. Turbomachine (10) selon l'une des revendications 1 à 7, **caractérisée en ce que** le stator (50) comporte des bras (48) reliant une virole interne (53) dudit stator (50) à une virole externe (51) dudit stator (50) et **en ce qu'**au moins une partie du conduit de prélèvement (46) est formée à l'intérieur de l'un desdits bras (48).

## Patentansprüche

1. Turbotriebwerk (10) eines Luftfahrzeugs, umfassend mindestens einen Hochdruckkompressor (18), eine Hochdruckturbine (22), eine Niederdruckturbine (24), einen Stator (50), der axial zwischen der Hochdruckturbine (22) und der Niederdruckturbine (24) angeordnet ist, einen Rotor (23) der Niederdruckturbine (24) mit einer Achse (A), der Schaufeln trägt, und eine Vorrichtung (36) zur Luftzufuhr und Druckbeaufschlagung dieses Rotors (23), umfassend mindestens eine Entnahmeleitung (46), die in der Lage ist, einen Anteil von Luft (F), die in dem Hochdruckkompressor (18) zirkuliert, zu entnehmen und sie zu einem ersten internen Behälter (39) zu befördern, der innerhalb des Stators (50) abgegrenzt ist, wobei der erste Behälter mit mindestens einem zweiten internen Behälter (40) kommuniziert, der durch den Rotor (23) der Niederdruckturbine (24) abgegrenzt ist, wobei der erste und der zweite Behälter (39, 40) mindestens teilweise durch eine feste Hülse mit Achse (A) getrennt sind, wobei die Vorrichtung mindestens einen Injektor (58) umfasst, der die feste Hülse (56) parallel zu der Achse (A) durchquert und eine Kommunikation zwischen dem ersten und dem zweiten Behälter (39, 40) etabliert, **dadurch gekennzeichnet, dass** der Injektor (58) von variablem Querschnitt ist, wobei der Injektor (58) mindestens Folgendes umfasst:
- ein Injektionsloch (60), das die Hülse (56) durchquert; und
- einen Verschluss (62), konfiguriert zum progressiven Verschließen des Injektionslochs (60) als Reaktion auf eine Druckdifferenz zwischen dem ersten und dem zweiten Behälter (39, 40).

2. Turbotriebwerk (10) nach dem vorstehenden Anspruch, **dadurch gekennzeichnet, dass** der Querschnitt zwischen einem maximalen Querschnitt mit vollständiger Öffnung des Injektors (58) und einem von null verschiedenen minimalen Querschnitt variiert.

3. Turbotriebwerk (10) nach Anspruch 1, **dadurch gekennzeichnet, dass** der Verschluss (62) eine Schublade (64), die in einer Ebene gleitet, die senkrecht zu einer Achse (B) des Injektionslochs (60) ist, die in der Lage ist, das Injektionsloch (60) progressiv zu verschließen, und ein Betätigungsmittel (66) der Schublade (64) umfasst.

4. Turbotriebwerk (10) nach dem vorstehenden Anspruch, **dadurch gekennzeichnet, dass** das Betätigungsmittel (66) der Schublade (64) einen ersten und einen zweiten Steuerkolben (68, 70) umfasst, die mit jedem der Enden der Schublade (64) fest verbunden sind, wobei der erste Kolben (68) in einer ersten Kammer (72) beweglich montiert ist, die mit dem ersten Behälter (42) kommuniziert, und der zweite Kolben (70) in einer zweiten Kammer (76) beweglich montiert ist, die mit dem zweiten Behälter (38) kommuniziert, und dadurch, dass die aus den Kolben (68, 70) und der Schublade (64) gebildete Baugruppe elastisch in Richtung einer Position der vollständigen Öffnung des Verschlusses (62) zurückgezogen wird.

5. Turbotriebwerk (10) nach dem vorstehenden Anspruch, **dadurch gekennzeichnet, dass** das Betätigungsmittel (66) der Schublade (64) ein röhrenförmiges Gehäuse (82) umfasst, das an der festen Hülse (56) angebaut ist, das auf seinem Umfang das Injektionsloch (60) und ein diametral gegenüberliegendes Eintrittsloch (84) umfasst, wobei die Enden des Gehäuses (82) die erste und die zweite Kammer (72, 76) abgrenzen, die jeweils durch jeweilige Bohrungen (74, 78) mit dem ersten und dem zweiten Behälter (42, 38) kommunizieren und die den ersten und den zweiten Kolben (68, 70), die mit der Schublade (64) fest verbunden sind, aufnehmen, wobei die Schublade (64) eine Verschlusswand (86) umfasst, die mit einem des ersten und des zweiten Kolbens (68, 70) fest verbunden und auf eine Weise angeordnet ist, um das Eintrittsloch (84) zum Verschließen des Injektionslochs zu verdecken, wobei der zweite Kolben (70) des Weiteren in Richtung der Position vollständiger Öffnung des Verschlusses (62) durch eine in der zweiten Kammer (76) untergebrachten Feder (80) zurückgezogen wird.

6. Turbotriebwerk (10) nach Anspruch 1, **dadurch gekennzeichnet, dass** der Verschluss ein Element umfasst, das aus einem Material hergestellt ist, das einen erhöhten Wärmeausdehnungskoeffizient besitzt, das in der Lage ist, das Injektionsloch progressiv zu verschließen, wobei die Ausdehnung eine Steigerung der Druckdifferenz zwischen dem ersten und dem zweiten Behälter (39, 40) begleitet.

7. Turbotriebwerk (10) nach dem vorstehenden Anspruch, **dadurch gekennzeichnet, dass** die feste Hülse (56) eine Vielzahl von Injektoren (58) umfasst, die winkelmäßig auf gleichförmige Weise auf einem gleichen Durchmesser (D) der festen Hülse (56) verteilt sind.

8. Turbotriebwerk (10) nach einem der Ansprüche 1 bis 7, **dadurch gekennzeichnet, dass** der Stator (50) Arme (48) umfasst, die eine interne Hülse (53) des Stators (50) mit einer externen Hülse (51) des Stators (50) verbinden, und dadurch, dass mindestens ein Teil der Entnahmeleitung (46) im Inneren eines der Arme (48) gebildet ist.

## Claims

1. An aircraft turbomachine (10) comprising at least one high-pressure compressor (18), a high-pressure turbine (22), a low-pressure turbine (24), a stator (50) arranged axially between the high-pressure turbine (22) and the low-pressure turbine (24), a rotor (23) of said low-pressure turbine (24) of axis (A) and carrying vanes, and a device (36) for ventilating and pressurising this rotor (23) comprising at least one collection pipe (46) suitable for collecting a fraction of the air (F) circulating in the high-pressure compressor (18) and of conveying it to a first internal enclosure (39) which is delimited internally to the stator (50), the first enclosure communicating with at least one second internal enclosure (40) delimited by said rotor (23) of the low-pressure turbine (24), said first and second enclosures (39, 40) being separated at least in part by a stationary shroud (56) of axis (A), said device comprising at least one injector (58) passing through said stationary shroud (56) parallel to said axis (A) and establishing communication between the first and second enclosures (39, 40), **characterised in that** the injector (58) has a variable cross-section, said injector (58) comprising:
- at least one injection orifice (60) passing through said shroud (56); and
- a shutter (62) configured to progressively shut off said injection orifice (60) in response to a pressure difference between said first and second enclosures (39, 40).

2. The turbomachine (10) according to the preceding claim, **characterised in that** the cross-section varies between a maximum full opening cross-section of the injector (58) and a non-zero minimum cross-section.

3. The turbomachine (10) according to the preceding claim, **characterized in that** the shutter (62) comprises a slide (64) sliding in a plane perpendicular to an axis (B) of the injection orifice (60), which is capable of progressively obturating said injection orifice (60), and a means (66) for actuating said slide (64).

4. The turbomachine (10) according to the preceding claim, **characterised in that** the means (66) for actuating the slide (64) comprises a first and a second control piston (68, 70), integral with each of the ends of the slide (64), the first piston (68) being mounted so as to be movable in a first chamber (72) communicating with the first enclosure (42) and the second piston (70) being mounted so as to be movable in a second chamber (76) communicating with the second enclosure (38), and **in that** the assembly formed by the pistons (68, 70) and the slide (64) is returned elastically towards a position of full opening of the shutter (62).

5. The turbomachine (10) according to the preceding claim, **characterised in that** the means (66) for actuating the slide (64) comprises a tubular housing (82) which is attached to the stationary shroud (56), which comprises on its periphery the injection orifice (60) and a diametrically opposed inlet orifice (84), the ends of said housing (82) delimiting the first and second chambers (72, 76) which communicate respectively via respective ports (74, 78) with the first and second enclosures (42, 38) and which receive the first and second pistons (68, 70) integral with the slide (64), the slide (64) comprising a closure wall (86) integral with one of the first and second pistons (68, 70) and arranged in such a way as to be able to mask the inlet orifice (84) in order to obturate the injection orifice, the second piston (70) also being returned to the position of full opening of the shutter (62) by a spring (80) housed in the second chamber (76).

6. The turbomachine (10) according to claim 1, **characterised in that** the shutter comprises an element made of a material having a high coefficient of thermal expansion, which is capable of progressively obturating said injection orifice, said expansion accompanying an increase in the pressure difference between said first and second enclosures (39, 40).

7. The turbomachine (10) according to the preceding claim, **characterised in that** the stationary shroud (56) comprises a plurality of injectors (58) distributed angularly in a uniform manner over the same diameter (D) of said stationary shroud (56).

8. The turbomachine (10) according to any one of claims 1 to 7, **characterised in that** the stator (50) comprises arms (48) connecting an internal shroud (53) of said stator (50) to an outer shroud (51) of said stator (50) and **in that** at least part of the collection pipe (46) is formed within one of said arms (48).
